Europäisches Patentamt

European Patent Office

Office européen des brevets

(19)

(11) Veröffentlichungsnummer: **0 134 002**
**B1**

(12) **EUROPÄISCHE PATENTSCHRIFT**

(45) Veröffentlichungstag der Patentschrift:
01.06.88

(21) Anmeldenummer: **84109255.4**

(22) Anmeldetag: **03.08.84**

(51) Int. Cl.⁴: **F 01 N 3/02,** F 01 N 3/28,
B 01 D 46/10

(54) **Dieselabgasfilter aus Drahtgewebe und Verfahren zu dessen Herstellung.**

(30) Priorität: **19.08.83 DE 3330020**

(43) Veröffentlichungstag der Anmeldung:
**13.03.85 Patentblatt 85/11**

(45) Bekanntmachung des Hinweises auf die Patenterteilung:
**01.06.88 Patentblatt 88/22**

(84) Benannte Vertragsstaaten:
**AT BE CH DE FR GB IT LI LU NL SE**

(56) Entgegenhaltungen:
**EP - A - 0 035 053**
**DE - A - 1 761 592**
**DE - A - 2 720 322**
**GB - A - 2 051 624**
**US - A - 3 037 637**

(73) Patentinhaber: **INTERATOM Gesellschaft mit beschränkter Haftung, Friedrich-Ebert-Strasse, D-5060 Bergisch Gladbach 1 (DE)**

(72) Erfinder: **Cyron, Theodor, Dipl.-Ing., Hüttenfeld 1, D-5060 Bergisch-Gladbach (DE)**

(74) Vertreter: **Mehl, Ernst, Dipl.-Ing. et al, Postfach 22 01 76, D-8000 München 22 (DE)**

### Beschreibung

Die vorliegende Erfindung betrifft ein Dieselabgasfilter aus Drahtgewebe nach dem Oberbegriff des ersten Anspruchs, wobei dieses Filter auch für eine zusätzliche Beschichtung mit katalytisch wirkenden Substanzen dienen soll, sowie ein Verfahren zu seiner Herstellung.

Aus der EP-A 0 035 053 ist bereits ein katalytisches Filter für die Dieselabgasreinigung bekannt, welches aus einer Siebgewebeanordnung besteht. Es wird dort bereits vorgeschlagen, Lagen aus gewelltem oder gefaltetem Siebgewebe im Wechsel mit ebenen Lagen aufeinanderzuschichten, so dass ein gasdurchlässiger Körper entsteht, der an den gegenüberliegenden Stirnflächen so durch Abdeckmittel verschlossen ist, dass ein verschlossener Stirnflächenabschnitt einem offenen Stirnflächenabschnitt gegenüberliegt. Diese Anordnung hat zur Folge, dass an einer Stirnfläche eintretende Abgase erst nach Durchdringung des Siebgewebes an der anderen Stirnfläche wieder austreten können. Auf diese Weise werden Russteilchen herausgefiltert und bei katalytischer Beschichtung auch andere Schadanteile umgesetzt.

Schwierigkeiten gab es bisher beim systematischen Verschliessen der einzelnen Öffnungen an den Stirnseiten. Weder das Aufbringen einer Lochmaske, noch das Verschliessen durch Einbringen von Zusatzmaterial lässt sich auf einfache Weise und für Serienfertigung verwirklichen.

Aus der DE-B 1 761 592 ist es auch schon bekannt, den Endbereich von durch glatte und gefaltete Lagen gebildeten Kanälen dadurch zu verschliessen, dass der Endbereich der Kanäle in Richtung auf das ebene Kanalinnere gefaltet und an der benachbarten Filterlage befestigt wird.

Aus der US-A 3 037 637 ist ferner auch für spiralig gewickelte Filterkörper bekannt, die Kanalenden durch Falten zu verschliessen, nämlich in dieser Schrift durch Falten und Verkleben der glatten Zwischenlagen.

Bei allen Ausbildungen nach dem Stand der Technik ist es jedoch nötig, die Enden der einzelnen Kanäle nach dem Herstellen des gesamten Körpers oder eines Teilkörpers aufzusuchen und dann wechselseitig zu verschliessen. Dies ist für Dieselabgasfilter, welche sehr viele, sehr kleine Kanäle aufweisen, äusserst aufwendig und in Serienfertigung technisch praktisch nicht durchführbar. Ein Falten oder Quetschen von Drahtgewebe wäre nach dem Wickeln oder Schichten eines Wabenkörpers auch wegen dessen Elastizität und Neigung zu Verformungen praktisch nicht möglich.

Der vorliegenden Erfindung liegt die Aufgabe zugrunde, ein Dieselabgasfilter der beschriebenen Art, bei dem die Öffnungen auf einfache und dauerhafte Weise wechselseitig geschlossen sind, zu schaffen und auf möglichst einfache, für die Serienfertigung geeignete Art herzustellen.

Zur Lösung dieser Aufgabe wird ein Verfahren mit den kennzeichnenden Merkmalen des Anspruchs 1 vorgeschlagen, sowie ein entsprechend hergestelltes Dieselabgasfilter mit den kennzeichnenden Merkmalen des Anspruchs 2.

Ein solches Dieselabgasfilter aus temperatur- und korrosionsbeständigem Metall aus abwechselnd mindestens einer Lage eines gewellten oder gefalteten Siebgewebes und mindestens einer ebenen, geschlossenen oder durchbrochenen Decklage, wobei die Lagen zu einem gasdurchlässigen Paket geschichtet oder spiralig zu einem zylindrischen, ovalen, rechteckigen oder mehreckigen gasdurchlässigen Körper aufgewickelt sind und wobei das Paket bzw. der Wickelkörper so an den gegenüberliegenden Stirnflächen verschlossen ist, dass ein verschlossener Stirnflächenabschnitt einem offenen Stirnflächenabschnitt gegenüberliegt, lässt sich besonders leicht herstellen, indem die betreffenden Stirnflächenabschnitte durch Quetschungen verschlossen werden, wobei die gewellte oder gefaltete Lage in Falten gegen die ebene Lage gedrückt wird. Diese Ausführungsform ist zunächst für den Fachmann nicht naheliegend, da erfahrungsgemäss Quetschungen an einem gewellten oder gefalteten Gewebeband zu allen möglichen Verformungen führen, die eine spätere Weiterverarbeitung schwierig machen. Es hat sich jedoch gezeigt, dass sich entsprechende Quetschungen der gewellten oder gefalteten Lage ohne erhebliche Verformungen durchführen lassen, wenn diese bereits bei der Herstellung der gewellten oder gefalteten Lage durchgeführt werden. Auf diese Weise lassen sich Quetschungen anbringen, ohne dass sich die Dimensionen der gewellten oder gefalteten Lage in irgendeiner Richtung erheblich verändern. Die gequetschten Stellen des Siebgewebes legen sich in Falten, die sich bei entsprechender Kraftanwendung genügend flachdrücken lassen.

Im Anspruch 3 wird in weiterer Ausgestaltung der Erfindung vorgeschlagen, dass alle oder ein Teil der Quetschungen durch Punktschweissverbindungen zusammengehalten werden wird. Punktschweissverbindungen lassen sich an geeigneter Stelle so anbringen, dass die ebene und die gewellte Lage im Bereich der Quetschungen fest verbunden bleiben, und auch nach längerem Betrieb keine Entweichpfade für das Abgas entstehen.

Im Anspruch 4 wird alternativ dazu vorgeschlagen, dass alle oder ein Teil der Quetschungen hart verlötet sind . Dies lässt sich beispielsweise durch Eintauchen der Stirnflächen in ein Lotbad oder durch anderweitige geeignete Belotung erreichen. Auch Hochtemperaturlöten ist möglich.

In besonderer Ausgestaltung der Erfindung wird im Anspruch 5 vorgeschlagen, dass das Dieselabgasfilter aus jeweils zwei oder mehr gewellten oder gefalteten Lagen übereinander im Wechsel mit einer ebenen Decklage angeordnet sind. Mit dieser Massnahme kann das Gewebe dichter ausgeführt werden und die Filterwirkung und die katalytisch wirkende Kontaktfläche wird entsprechend grösser.

Weiterhin wird im Anspruch 6 vorgeschlagen, dass die ebene Decklage aus Tresse bestehen soll. Tresse ist eine besonders dichte Art von Siebgewebe, bei der dickere Längsdrähte von dünnen Querdrähten umflochten sind. Dieses Gewebe eignet sich besonders gut als einschichtige Decklage.

Im Anspruch 7 wird alternativ dazu vorgeschlagen, dass die ebene Decklage aus einem glatten nicht durchbrochenen Metallblech bestehen soll. Dies kann bei verschiedenen Ausführungen von Vorteil sein, da dann die Abgase nur durch die gewellte oder gefaltete Lage dringen können.

Für Dieselabgasfilter besonders geeignet ist eine Anordnung von jeweils drei Lagen eines gewellten oder gefalteten Siebgewebes und einer ebenen Lage aus Tresse.

Beim Aufwickeln der gequetschten, gewellten Lagen hat es sich gezeigt, dass Spannungen und Verformungen auftreten können, die durch Einschnitte in die gewellten oder gefalteten Lagen an den Stirnseiten gemäss Anspruch 9 vermindert werden können.

Im Anspruch 10 wird dazu vorgeschlagen, dass die Einschnitte vorzugsweise jeweils zwischen den einzelnen Quetschungen angeordnet sein sollen. Auf diese Weise werden beim Wickeln wegen der unterschiedlichen Umfangslängen der einzelnen Schichten Materialzwängungen oder -dehnungen vermieden.

Im Anspruch 11 wird dazu in spezieller Ausführung vorgeschlagen, dass zumindest die Einschnitte an der Stirnseite, an der die Quetschungen gegen die innere angrenzende ebene Lage gerichtet sind, V-förmig ausgestaltet· sind. An dieser Stirnseite verläuft die gewellte oder gefaltete Schicht nämlich jeweils auf der Innenseite der ebenen Lage, wodurch deren Gesamtlänge grösser als die der ebenen Lage sein muss. Eine gewellte oder gefaltete Lage kann dieses leicht ausgleichen, jedoch würden ohne die V-förmigen Einschnitte Zwängungen im Bereich der Quetschungen auftreten. Die V-förmigen Einschnitte ermöglichen ein problemloses Wickeln.

Eine prinzipiell andere Form des erfindungsgemässen Dieselabgasfilters wird im Anspruch 12 und den folgenden vorgeschlagen. Dazu werden die gewellten oder gefalteten Lagen mäanderförmig zu einem quaderförmigen Körper geschichtet, wobei zwischen den Mäanderschleifen jeweils ebene glatte oder durchbrochene Zwischenlagen angeordnet sind. Bei dieser Art der Schichtung entfallen die oben beschriebenen Probleme der spiralförmigen Wickelkörper und es werden keine Einschnitte benötigt.

Im Anspruch 13 wird dazu speziell vorgeschlagen, dass die ebenen Zwischenlagen dünne Bleche sein sollen, was für den gesamten Aufbau von Vorteil ist.

Bei dieser Ausführungsform treten zwar nicht die Schwierigkeiten wie bei der spiralförmigen Wicklung auf, jedoch kann es an den Umkehrstellen der Mäanderschleifen zu Unregelmässigkeiten kommen, weshalb im Anspruch 14 vorgeschlagen wird, dass die gewellten oder gefalteten Lagen an den Umkehrstellen der Mäanderschleifen jeweils einen kurzen ursprünglich ebenen Abschnitt aufweisen, welcher in eine gleichmässige Kehre gebogen ist. Diese Ausführungsform lässt sich leicht dadurch erreichen, dass bei der Herstellung des gewellten oder gefalteten Siebgewebebandes in regelmässigen Abständen, die der Breite des zu bildenden Quaders entsprechen, jeweils eine oder zwei Wellen ausgelassen werden und das Band dort eben bleibt. Dies erleichtert die spätere Schichtung in Mäanderform erheblich und ermöglicht regelmässige Ränder des Quaders.

Im Anspruch 15 wird in weiterer Ausgestaltung der Erfindung vorgeschlagen, dass die Kehren an den Umkehrstellen der Mäanderschleifen jeweils, so weit wie möglich, flachgedrückt sind. Auf diese Weise werden Entweichpfade für Abgas an diesen Stellen vermieden.

Im Anspruch 16 wird als zusätzliche Massnahme noch vorgeschlagen, dass die Kehren an der Aussenseite mit einer temperaturbeständigen Dichtmasse vergossen sind, wodurch eine zusätzliche Sicherheit bei Unregelmässigkeiten in der Herstellung bewirkt wird.

Im Anspruch 17 wird schliesslich vorgeschlagen, dass der quaderförmige Körper aus Siebgewebe in ein metallisches Gehäuse eingebettet ist, wobei er auch in dieses Gehäuse eingelötet oder mit einer keramischen Masse in diesem vergossen sein kann.

Ausführungsbeispiele der Erfindung sind schematisch in der Zeichnung dargestellt, und zwar zeigt

Fig. 1 den prinzipiellen Aufbau von Dieselabgasfiltern aus gewellten und ebenen Lagen,

Fig. 2–5 erläutern den genauen Aufbau eines spiralförmig aufgewickelten zylindrischen Dieselabgasfilters und

Fig. 6–9 dienen zur Veranschaulichung eines quaderförmigen Dieselabgasfilters.

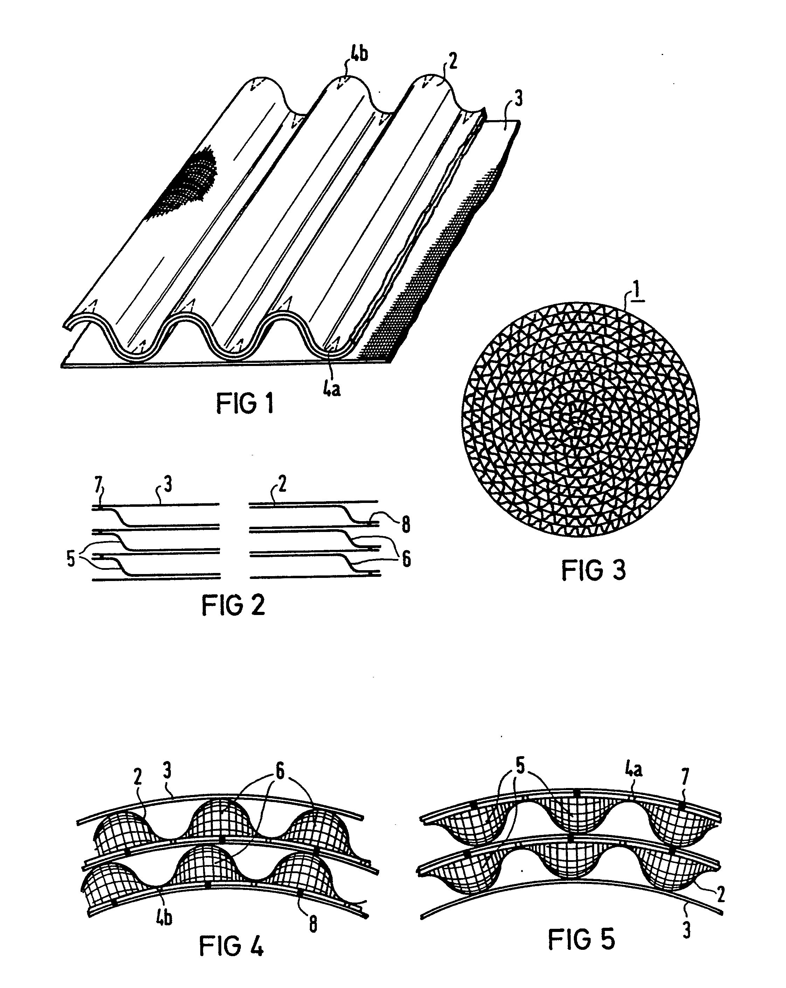

Fig. 1 zeigt in einem Ausschnitt die Grundstruktur, aus der alle hier beschriebenen Dieselabgasfilter hergestellt werden. Eine ebene Lage 3 und eine gegebenenfalls aus einer oder mehreren Lagen bestehende gewellte Siebgewebeschicht 2 liegen abwechselnd aufeinander. Die Stellen, an denen beim spiralförmigen Aufwickeln Einschnitte vorgesehen werden können, sind markiert und mit 4a bzw. 4b gekennzeichnet.

Fig. 2 zeigt einen Ausschnitt aus einem Längsschnitt durch einen erfindungsgemässen, spiralförmig aufgewickelten Dieselabgasfilter, wobei der Längsschnitt nicht exakt in einer Ebene liegt, sondern in der Mitte an der Unterbrechung von einem Wellental auf einen Wellenberg der gewellten Lage wechselt. Die im Wechsel zu der ebenen Lage 3 angeordnete gewellte Lage 2 ist an den Stirnseiten durch Quetschungen 5 bzw. 6 gegen die glatte Lage 3 gedrückt. Dabei sind an der einen Stirnseite alle Quetschungen 5 gegen die aussenliegende ebene Lage 3 gerichtet, während an der anderen Stirnseite alle Quetschungen 6 gegen die innenliegende ebene Lage gerichtet sind.

Schweisspunkte 7 bzw. 8 verstärken die Quetschungen.

In Fig. 3 ist die Stirnseite eines spiralförmig gewickelten Dieselabgasfilters 1 bzw. ein Querschnitt durch diesen dargestellt.

In Fig. 4 wird ein Ausschnitt aus der einen Stirnseite eines spiralförmig gewickelten Dieselabgasfilters dargestellt, und zwar ein Ausschnitt aus der Stirnseite, an der alle Quetschungen 6 gegen die innenliegende ebene Schicht 3 gerichtet sind. Schweisspunkte 8 verstärken die Verbindung an den Quetschungen 3. Entlastungsschlitze 4b helfen Dehnungen in der Nähe der Quetschungen 6 zu vermeiden, welche durch die unterschiedlichen Umfänge von ebener Lage 3 und gewellter Lage 2 entstehen.

In Fig. 5 ist ein Ausschnitt aus der anderen Stirnseite eines spiralförmig gewickelten Dieselabgasfilters dargestellt. Hier sind alle Quetschungen 5 in Richtung auf die aussenliegende ebene Schicht 3 angeordnet. Punktschweissungen 7 dienen wiederum zur Stabilisierung des Gefüges. V-förmige Schlitze 4a dienen auf dieser Stirnseite zur Vermeidung von Zwängungen im Bereich der Quetschungen 5, die sonst durch die spiralförmige Anordnung entstehen würden.

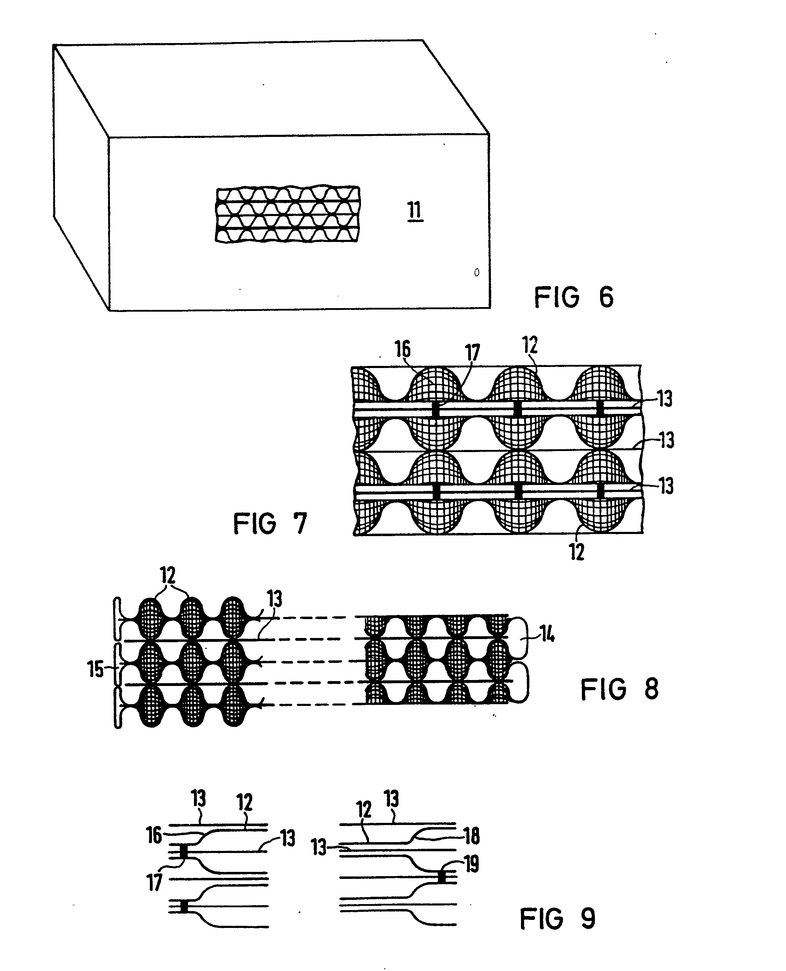

In den Fig. 6–9 ist ein anderes Ausführungsbeispiel der Erfindung, nämlich ein quaderförmiges Dieselabgasfilter dargestellt. Fig. 6 zeigt die Gesamtansicht des quaderförmigen Dieselabgasfilters 11 mit einem Ausschnitt in der Stirnseite, der in Fig. 7 bzw. Fig. 8 im Detail gezeigt wird. Fig. 7 zeigt die Anordnung von gewellten Lagen 12 zu glatten Zwischenlagen 13. Jeweils zwei einer glatten Zwischenlage 13 benachbarte gewellte Lagen 12 weisen an einer Stirnseite Quetschungen 16 in Richtung auf diese Zwischenlage 13 auf. An der anderen Stirnseite weisen die entsprechenden gewellten Lagen 12 Quetschungen in Richtung von dieser Zwischenlage 13 weg auf. Auch bei dieser Anordnung können Punktschweissungen 17 die Stabilität und Haltbarkeit steigern.

In Fig. 8 wird die mäanderförmige Anordnung der gewellten Lagen 12 mit ihren Kehren 14 und 15 an den Umkehrstellen der Mäanderschleifen veranschaulicht. Wie zu erkennen ist, gibt es an jeder Stirnseite zwei verschiedene Arten von Kehren, nämlich solche 15, die von einer Zwischenlage 13 ausgehen, und solche 14, die von zwei Zwischenlagen 13 ausgehen. An der anderen Stirnseite ist es für jede Kehre jeweils genau umgekehrt, wobei der Übergang möglichst gleichmässig erfolgen soll. Diese Kehren lassen sich am einfachsten dadurch herstellen, dass in gleichmässigen Abständen bei der Herstellung des gewellten Bandes ebene Stücke gelassen werden, welche sich dann leichter in die beschriebene Form der Kehren 14 und 15 legen lassen.

In Fig. 9 schliesslich wird ein schematischer Längsschnitt durch einen quaderförmigen Dieselabgasfilter gezeigt, wobei wiederum in der Mitte ein Wechsel von einem Wellental zu einem Wellenberg zur Veranschaulichung des Aufbaus vorgenommen wurde. Fig. 9 zeigt wiederum die abwechselnd angeordneten ebenen Lagen 13 und die gewellten Lagen 12. In bezug auf eine dieser ebenen Zwischenlagen 13 sind die Quetschungen 16 der benachbarten Lagen an einer Stirnseite zu dieser hin gerichtet, während die Quetschungen an der anderen Stirnseite von dieser Zwischenlage weg gerichtet sind. Die Lage von eventuellen Punktschweissungen 17 und 19 wird ebenfalls veranschaulicht.

Die Zwischenlagen 13 können auch Untermass gegenüber den gewellten Lagen 12 haben, so dass sie nicht in die Quetschungen einbezogen werden. Da die Zwischenlagen 13 ohnehin hauptsächlich als Abstandshalter dienen, können sie gegebenenfalls sogar entfallen, wenn «Wellenberge» mit genügender Masshaltigkeit immer nur «Wellenbergen» gegenüberliegen.

Die vorliegende Erfindung eignet sich in verschiedener Dimensionierung für grosse oder kleine Dieselmaschinen, wobei je nach katalytischer Beschichtung der Russ und verschiedene Schadstoffe beseitigt oder zumindest vermindert werden können.

## Patentansprüche

1. Verfahren zur Herstellung eines Dieselabgasfilters (1 bzw. 11) aus temperatur- und korrosionsbeständigem Metall aus abwechselnd jeweils mindestens einer Lage eines gewellten oder gefalteten Siebgewebes (2 bzw. 12) und mindestens einer ebenen, geschlossenen oder durchbrochenen Decklage (3 bzw. 13), wobei die Lagen zu einem gasdurchlässigen Paket geschichtet oder spiralig zu einem zylindrischen, ovalen, rechteckigen oder mehreckigen gasdurchlässigen Körper aufgewickelt werden und wobei das Paket bzw. der Wickelkörper so an den gegenüberliegenden Stirnflächen verschlossen wird, dass ein verschlossener Stirnflächenabschnitt einem offenen Stirnflächenabschnitt gegenüberliegt, gekennzeichnet durch folgende Merkmale:

a) Die gewellte oder gefaltete Lage (2 bzw. 12) wird bei ihrer Herstellung mit Quetschungen (5, 6 bzw. 16, 18) an den gewellten Rändern versehen, welche an dem einen Rand bis zur Ebene der Erhöhungen und an dem anderen Rand bis zur Ebene der Vertiefungen hin gedrückt sind.

b) Die gewellte oder gefaltete Lage (2 bzw. 12) wird im Wechsel mit einer ebenen Decklage (3 bzw. 13) zu einem gasdurchlässigen Paket geschichtet oder aufgewickelt.

2. Dieselabgasfilter, hergestellt nach einem Verfahren gemäss Anspruch 1, dadurch gekennzeichnet, dass die verschlossenen Stirnflächenabschnitte durch Quetschungen (5, 6 bzw. 16,18) verschlossen sind, wobei die gewellte oder gefaltete Lage (2 bzw. 12) in Falten gegen die ebene Lage (3 bzw. 13) gedrückt ist, und zwar so, dass die Quetschungen (5, 6 bzw. 16, 18) an einer Stirnseite zur Ebene der Erhöhungen und an der anderen Stirnseite zur Ebene der Vertiefungen hin gedrückt sind.

3. Dieselabgasfilter nach Anspruch 2, dadurch gekennzeichnet, dass alle oder ein Teil der Quetschungen (5, 6 bzw. 16, 18) durch Punktschweissungen (7, 8 bzw. 17, 19) zusammengehalten sind.

4. Dieselabgasfilter nach Anspruch 2, dadurch gekennzeichnet, dass alle oder ein Teil der Quetschungen (5, 6 bzw. 16, 18) hart oder hochtemperatur-verlötet sind.

5. Dieselabgasfilter nach einem der Ansprüche 2 bis 4, dadurch gekennzeichnet, dass jeweils zwei oder mehr gewellte oder gefaltete Lagen (2 bzw. 12) im Wechsel mit einer ebenen Decklage (3 bzw. 13) angeordnet sind.

6. Dieselabgasfilter nach einem der Ansprüche 2 bis 5, dadurch gekennzeichnet, dass die ebene Decklage (3) aus Tresse besteht.

7. Dieselabgasfilter nach einem der Ansprüche 2 bis 5, dadurch gekennzeichnet, dass die ebene Decklage (3 bzw. 13) aus einem glatten nicht durchbrochenen Metallblech besteht.

8. Dieselabgasfilter nach Anspruch 6, dadurch gekennzeichnet, dass jeweils drei Lagen eines gewellten oder gefalteten Siebgewebes (3) und eine ebene Lage (3) aus Tresse abwechselnd angeordnet sind.

9. Dieselabgasfilter nach Anspruch 8, dadurch gekennzeichnet, dass die gewellte oder gefaltete Lage (2) aus Siebgewebe Einschnitte (4a, 4b) an den Stirnseiten aufweist.

10. Dieselabgasfilter nach Anspruch 9, dadurch gekennzeichnet, dass die Einschnitte (4a, 4b) vorzugsweise jeweils zwischen den einzelnen Quetschungen (5, 6) angeordnet sind.

11. Dieselabgasfilter nach Anspruch 10, dadurch gekennzeichnet, dass zumindest die Einschnitte an der Stirnseite, an der die Quetschungen (5) gegen die innere angrenzende ebene Lage (3) gerichtet sind, V-förmig sind.

12. Dieselabgasfilter nach einem der Ansprüche 2 bis 7, dadurch gekennzeichnet, dass die gewellten oder gefalteten Lagen (12) mäanderförmig zu einem quaderförmigen Körper (11) geschichtet sind, wobei zwischen den Mäanderschleifen jeweils ebene, glatte oder durchbrochene Zwischenlagen (13) angeordnet sind.

13. Dieselabgasfilter nach Anspruch 12, dadurch gekennzeichnet, dass die ebenen Zwischenlagen (13) dünne Bleche sind.

14. Dieselabgasfilter nach Anspruch 12 oder 13, dadurch gekennzeichnet, dass die gewellten oder gefalteten Lagen (12) an den Umkehrstellen der Mäanderschleifen jeweils einen kurzen, ursprünglich ebenen Abschnitt (14, 15) aufweisen, welcher in eine gleichmässige Kehre gebogen ist.

15. Dieselabgasfilter nach Anspruch 14, dadurch gekennzeichnet, dass die Kehren (14, 15) jeweils, soweit wie möglich, flachgedrückt sind.

16. Dieselabgasfilter nach Anspruch 14 oder 15, dadurch gekennzeichnet, dass die Kehren (14, 15) an der Aussenseite mit einer temperaturbeständigen Dichtmasse vergossen sind.

17. Dieselabgasfilter nach einem der Ansprüche 12 bis 16, dadurch gekennzeichnet, dass der quaderförmige Körper (11) aus Siebgewebe in ein metallisches Gehäuse eingebettet ist.

**Revendications**

1. Procédé de fabrication d'un filtre (1 et 11) pour les gaz d'échappement d'un moteur Diesel, en un métal résistant à la température et à la corrosion, constitué alternativement d'au moins une couche d'une toile métallique ondulée ou pliée (2 et 12) et d'au moins une couche extérieure plane (3 et 13), fermée ou interrompue. Les couches étant superposées en un paquet perméable aux gaz ou étant enroulées en spirale en un corps perméable aux gaz de forme cylindrique, ovale, rectangulaire ou polygonale, les faces frontales opposées du paquet ou du corps enroulé étant fermées de manière qu'une partie de surface frontale fermée soit en face d'une partie de surface frontale ouverte, remarquable par les caractéristiques suivantes:
a) les bords ondulés de la couche ondulée ou pliée (2 et 12) sont munis, lors de la fabrication, de parties refoulées (5, 6 et 16, 18) qui sont repoussées, sur un bord, jusqu'au plan des sommets et, sur l'autre bord, jusqu'au plan des creux,
b) la couche (2 et 12) ondulée ou pliée est alternativement empilée ou enroulée avec une couche supérieure plane (3 et 13) en un paquet perméable aux gaz.

2. Filtre des gaz d'échappement d'un moteur Diesel, fabriqué par un procédé suivant la revendication 1, caractérisé en ce que les parties fermées de surface frontale sont fermées par des parties refoulées (5, 6 et 16, 18), la couche ondulée ou pliée (2 et 12), étant repoussée en plis sur une couche plane (3 et 13) et cela de sorte que les parties refoulées (5, 6 et 16, 18) soient repoussées, d'un côté frontal, jusqu'au plan des sommets et, de l'autre côté frontal, jusqu'au plan des creux.

3. Filtre des gaz d'échappement d'un moteur Diesel suivant la revendication 2, caractérisé en ce que toutes les parties refoulées (5, 6 et 16, 18) ou un certain nombre d'entre elles sont maintenues par des soudures par points (7, 8 et 17, 19).

4. Filtre des gaz d'échappement d'un moteur Diesel suivant la revendication 2, caractérisé en ce que toutes les parties refoulées (5, 6 et 16, 18) ou un certain nombre d'entre elles sont brasées par un brasage fort ou à haute température.

5. Filtre des gaz d'échappement d'un moteur Diesel suivant l'une des revendications 2 à 4, caractérisé en ce que deux ou plus de deux couches ondulées ou pliés (2 et 12) alternent avec une couche extérieure plane (3 et 13).

6. Filtre des gaz d'échappement d'un moteur diesel suivant l'une des revendications 2 à 5, caractérisé en ce que la couche extérieure plane (3) est en tresse.

7. Filtre des gaz d'échappement d'un moteur Diesel suivant l'une des revendications 2 à 5, caractérisé en ce que la couche extérieure plane (3 et 13) est en une tôle métallique lisse et ininterrompue.

8. Filtre des gaz d'échappement d'un moteur Diesel suivant la revendication 6, caractérisé en ce que trois couches d'une toile métallique ondulées ou pliées (3) et une couche plane en tresse (3) sont disposées en alternance.

9. filtre des gaz d'échappement d'un moteur Diesel suivant la revendication 8, caractérisé en ce que la couche ondulée ou pliée (2), en toile métallique, comporte des entailles (4a, 4b) sur les côtés frontaux.

10. Filtre des gaz d'échappement d'un moteur Dieseul suivant la revendication 9, caractérisé en ce que les entailles (4a, 4b) sont disposées de préférence entre les parties refoulées (5, 6).

11. Filtre des gaz d'échappement d'un moteur Diesel suivant la revendication 10, caractérisé en ce qu'au moins les entailles, du côté frontal, où les parties refoulées (5) vont vers la couche plane intérieure adjacente (3), sont en forme de V.

12. Filtre des gaz d'échappement d'un moteur Diesel suivant l'une des revendications 2 à 7, caractérisé en ce que les couches ondulées ou pliées (12) sont empliées en méandres pour former un corps parallélépipédique (11), des couches intermédiaires (13) planes lisses ou percées étant interposées entre les boucles des méandres.

13. Filtre des gaz d'échappement d'un moteur Diesel suivant la revendication 12, caractérisé en ce que les couches intermédiaires (13) planes sont des tôles minces.

14. Filtre des gaz d'échappement d'un moteur Diesel suivant la revendication 12 ou 13, caractérisé en ce que les couches ondulées ou pliées (12) comportent, aux emplacements de changement de direction des boucles d'une méandre, une section (14, 15) courte et plane à l'origine, qui est recourbée en une partie recourbée de manière uniforme.

15. Filtre des gaz d'échappement d'un moteur Diesel suivant la revendication 14, caractérisé en ce que les parties recourbées (14, 15) sont autant que possible aplaties par compression.

16. Filtre des gaz d'échappement d'un moteur Diesel suivant la revendication 14 ou 15, caractérisé en ce que les parties recourbées (14, 15) sont enrobées, du côté extérieur, d'une masse d'étanchéité stable à la température.

17. Filtre des gaz d'échappement d'un moteur Diesel suivant l'une des revendications 12 à 16, caractérisé en ce que le corps (11) parallélépipédique en toile métallique est logé dans une enveloppe métallique.

**Claims**

1. A process for manufacturing a diesel exhaust filter (1 11) of heat- and corrosion-resistant metal, from alternate plies respectively of at least one layer of a corrugated or folded woven gauze (2; 12) and at least one flat, continuous or perforated covering layer (3; 13), the layers being stacked to form a gas-permeable packet or wound spirally to form a cylindrical, oval, rectangular or higher polygonal gas-permeable body, and the packet or the wound body being sealed on the opposite front and back faces so that a sealed face section is situated opposite an open face section, characterised by the following features:

a) the corrugated or folded layer (2; 12) is provided in the course of its production with constriction (5, 6; 16, 18) at the corrugated edges which at one edge are pressed up to the level of the elevations and at the other edge down to the level of the depressions.

b) the corrugated or folded layer (2; 12) is stacked or wound alternately with a flat covering layer (3; 13) to form a gas-permeable packet.

2. A diesel exhaust filter, manufactured by a method according to claim 1, characterised in that the sealed face section is sealed by constrictions (5, 6; 16, 18), the corrugated or folded layer (2; 12) being pressed in folds against the flat layer (3; 13) in such a way that at one face the constrictions (5, 6; 16, 18) are pressed up to the level of the elevations and at the other face down to the level of the depressions.

3. A diesel exhaust filter according to claim 2, characterised in that all or some of the constrictions (5, 6; 16, 18) are held together by spot welding (7, 8; 17, 19).

4. A diesel exhaust filter according to claim 2, characterised in that all or some of the constrictions (5, 6; 16, 18) are brazed or high-temperature brazed.

5. A diesel exhaust filter according to any one of claims 2 to 4, characterised in that two or more corrugated or folded layers (2; 12) alternate with one flat covering layer (3; 13).

6. A diesel exhaust filter according to any one of claims 2 to 5, characterised in that the flat covering layer (3) consists of tress.

7. A diesel exhaust filter according to any one of claims 2 to 5, characterised in that the flat covering layer (3, 13) consists of a smooth, unperforated metal sheet.

8. A diesel exhaust filter according to claim 6, characterised in that three layers of corrugated or folded woven gauze (3) alternate with one flat layer (3) of tress.

9. A diesel exhaust filter according to claim 8, characterised in that the corrugated or folded layer (2) of woven gauze has cut-outs (4a, 4b) on the front faces.

10. A diesel exhaust filter according to claim 9, characterised in that the cut-outs (4a, 4b) are preferably arranged between the individual constrictions (5, 6).

11. A diesel exhaust filter according to claim 10, characterised in that at least the cut-outs on the front face at which the constrictions (5) are directed against the inner adjacent flat layer (3), are V-shaped.

12. A diesel exhaust filter according to any one of claims 2 to 7, characterised in that the corrugated or folded layers (12) are layered in meanders into a rectangular shaped body (11) with flat, smooth or perforated intermediate layers (13) being arranged between the meanders.

13. A diesel exaust filter according to claim 13, characterised in that the flat intermediate layers (13) are thin sheets.

14. A diesel exhaust filter according to claim 12 or claim 13, characterised in that the corrugated or folded layers (12) each have, at the turning points of the meanders, a short, originally flat section (14, 15) which is curved in a uniform bend.

15. A diesel exhaust filter according to claim 14, characterised in that the bends (14, 15) are each, as far as possible, pressed flat.

16. A diesel exhaust filter according to claim 14 or claim 15, characterised in that a temperature resistant seal is cast on the outer side of the bends (14, 15).

17. A diesel exhaust filter according to any one of claims 12 to 16, characterised in that the rectangular solid body (11) of woven gauze is embedded in a metallic housing.

FIG 1

FIG 2

FIG 3

FIG 4

FIG 5

FIG 6

FIG 7

FIG 8

FIG 9